# EUROPEAN PATENT APPLICATION

(11) **EP 4 811 593 A1**
(43) Date of publication of application: **23.09.2026**
(21) Application number: 25164912.5
(22) Date of filing: 20.03.2025
(51) Int. Cl.: H02J 3/38, H02J 3/18, H02J 3/00, H02M 1/00

(54) **CONTROL DEVICE AND METHOD FOR ACTIVE POWER CONTROL IN GRID-FORMING CONVERTER**

(71) Applicant: Hitachi Energy Ltd, 8050 Zürich (CH)
(72) Inventor: Hasler, Jean-Philippe, 72244 Västerås (SE); Bongiorno, Massimo, 41 261 Göteborg (SE); Svensson, Jan, 72346 Västerås (SE); Liu, Wentao, 41281 Göteborg (SE)
(74) Representative: AWA Sweden AB

(57) **Abstract**

The present disclosure relates to a control device (20) configured to control a voltage source converter, VSC, (10) electrically connected to an electrical power network (40) via a point of common connection, PCC, the control device (20) comprising an active power loop controller (21), wherein, when the electrical power network (40) after a fault operates with a short-circuit power indicative of a short-circuit ratio, SCR, within at least one predetermined SCR interval (SCR_{I}, SCR_{II}), the active power loop controller (21) is configured to: control an internal frequency (ω_{EMF}) of the VSC (10) via an active power control circuit (211) when an active power (P_{g}) being exchanged between the VSC and the electrical power network (40) via the PCC is equal to or below an active power saturation limit (P_{sat_UPlim}), and control the internal frequency (ω_{EMF}) via the active power control circuit (211) and an active power limiter control circuit (212) to reduce the active power (P_{g}) below the active power saturation limit (P_{sat_UPlim}) when the active power (P_{g}) is above the active power saturation limit (P_{sat_UPlim}), wherein the active power saturation limit (P_{sat_UPlim}) is based at least on one of at least one active power limit (Pₗᵢₘ₁, Pₗᵢₘ₂), each active power limit based at least on at least one parameter (V_{g}, P_{g}, Q_{g}) of the electrical power network (40). A power supporting system and a method of controlling a voltage source converter are also disclosed.

## Description

### Technical Field

The present disclosure relates to a control device and method for active power control in a grid-forming converter.

### Background

Global climate change has prompted action plans to reduce CO₂ emissions by phasing out fossil fuels and transitioning to electrified processes. This shift increases electric loads, largely supported by non-dispatchable renewable energy sources like wind and solar, replacing coal and gas power plants. While renewable energy offers environmental benefits, it presents challenges to grid stability due to fundamental differences from traditional power systems.

Traditional power plants use synchronous machines that stabilize grid frequency through kinetic energy stored in large spinning masses. In contrast, renewable sources rely on power electronic converters, which lack inertia and do not contribute to short-circuit power or frequency stabilization, thereby weakening the grid. To address these issues, Transmission System Operators (TSOs) and Distribution System Operators (DSOs) increasingly require converters to adopt grid-forming control strategies.

When inverter-based sources (IBS), such as offshore wind farms, operate in weak grid conditions, they face challenges in maintaining synchronization and stability, particularly after fault events. Weak grids, characterized by low short-circuit power, often result from long transmission distances or disturbances, as for the event that has led to the 2019 UK blackout. In such cases, IBS plants struggle to recover because they rely on stiff grid voltage and frequency as reference signals. For instance, in the 2019 UK blackout, an offshore wind farm connected to shore via a long cable experienced instability when grid strength dropped, and despite being supported by a standard static synchronous compensator (STATCOM), it failed to recover. This highlights the limitations of conventional grid-supporting technologies, which may fail to provide adequate dynamic response or frequency support under weak grid conditions.

In view of these challenges, there is a need for improved solutions to overcome the limitations of current grid-forming control strategies.

### Summary

It is an object of the present disclosure to provide an improved solution that alleviates at least some drawbacks with present solutions. This and other objects, which will be implicitly and explicitly detailed in the following disclosure, are solved by one or more of the inventions defined in the claims. Additional advantageous embodiments are described in the following.

When a fault occurs in an electrical power network resulting in a perturbation of an impedance of the electrical power network from its pre-fault impedance, a short-circuit ratio (SCR) seen from a connected IBS is typically reduced, indicating a weaker electrical power network. Moreover, with more IBS and less synchronous generators, the electrical power network obtains less inertia, which otherwise normally helps dampen frequency fluctuations and smooth out the response to changes in load or disturbances. For weak electrical power networks, in particular ultra-weak electrical power networks, the converter must respond quickly to frequency and voltage changes, which can lead to oscillations or, in the worst case, instability if not managed properly. If the converter tries to supply more active power than the electrical power network can handle, it can cause large power angle deviations, or even loss of synchronization together with voltage instability.

The present disclosure is based on the inventors' realization that power angle stability and synchronization by a converter (specifically, a grid-forming converter) electrically connected to a weakened electrical power network may be maintained by an enhanced power control method, which method involves acquiring an active power limit during a transient period of a SCR drop of the electrical power network, and controlling an internal frequency of the converter electrically connected to the electrical power network based on whether an active power being exchanged between the converter and the electrical power network via a point of common connection (PCC) is above or below the active power limit. As a result, the frequency of the converter is controlled so that the active power is regulated to stay within a transmission capacity of the electrical power network, which facilitates power angle stability and maintained synchronization.

According to a first aspect of the present disclosure, a control device configured to control a converter, such as a voltage source converter, VSC, electrically connected to an electrical power network via a point of common connection, PCC, is provided. The control device comprises an active power loop controller. When the electrical power network, after a fault, operates with a short-circuit power indicative of a short-circuit ratio, SCR, within at least one predetermined SCR interval, the active power loop controller is configured to: control an internal frequency ω_{EMF} of the VSC via an active power control circuit when an active power P_{g} being exchanged between the VSC and the electrical power network via the PCC is equal to or below an active power saturation limit P_{sat_UPlim}, and control the internal frequency ω_{EMF} via the active power control circuit and an active power limiter control circuit to reduce the active power P_{g} below the active power saturation limit P_{sat_UPlim} when the active power is above the active power saturation limit P_{sat_UPlim}. The active power saturation limit P_{sat_UPlim} is based at least on one of at least one active power limit, each active power limit Pₗᵢₘ₁, Pₗᵢₘ₂ based at least on at least one parameter of the electrical power network.

The control device according to the first aspect advantageously enables enhanced control of a converter in situations wherein an electrical power network is characterizable as ultra-weak, i.e., with a SCR equal to or less than 1. By having dedicated control circuits for the respective scenarios of whether the active power is above or below the active power saturation limit P_{sat_UPlim}, the responsiveness of converter control is enhanced. This advantageously reduces a risk of failing to recover power angle stability post-fault. Moreover, the control device may advantageously facilitate maintaining synchronism post-fault.

The control device according to the first aspect may advantageously be used for controlling a converter electrically connected to an electrical power network for facilitating and maintain synchronism when receiving power from renewable power generation sources, such as off-shore wind farms.

The control device may comprise at least one processing unit configured to execute instructions corresponding to an enhanced power control method. The control device may comprise a memory for storing said instructions. The memory may be configured to store control logic, threshold values, and historical data for adaptive control. The control device may be communicatively connected to at least one measurement device for measuring at least one parameter of the electrical power network and/or the converter. For instance, the at least one measurement device may comprise a current transformer (CT) and/or a voltage transformer (VT) for measuring a current and a voltage at the PCC, respectively. The control device may be configured to determine at least one parameter of the electrical power network and/or the converter based on measurements of current and/or voltage. For instance, the control device may be configured to determine active power and reactive power based on current and voltage measurements. The control device may comprise a power supply unit for providing electrical power to components of the control device. The control device may comprise a communication module for facilitating communication between the control device and the converter. The control device may be configured to receive input from an operator via a user interface. This may allow a user to change a predetermined setting, such as a predetermined SCR interval or an active power reference.

According to one embodiment, the at least one active power limit comprises a first active power limit based at least on a current limitation of a current between the VSC and the electrical power network via the PCC, and/or a second active power limit based at least on an impedance estimation of an impedance of the electrical power network. By having a plurality of active power limits, different active power limits may be selected as the active power saturation limit depending on situation and effective range of SCR values. In particular, a first active power limit may be more suitable for a first SCR interval and a second active power limit may be more suitable for a second SCR interval different from the first SCR interval. Thus, by having a plurality of active power limits, the control device may control the converter with an increased flexibility. The at least one active power limit may comprise more than two active power limits, such as three, four, five, or more, wherein each active power limit is different or determined using a different principle. As an option, a value of one of the active power limits may be selected by a user.

According to one embodiment, the control device is configured to: in response to a SCR transient drop into the at least one predetermined SCR interval, the active power saturation limit is initially based at least on the first active power limit. The control device may be configured to base the power saturation limit at least on the second active power limit after a certain time period has lapsed. Thus, the control device may apply active power limit depending on criteria such as volatility in at least one parameter, such as voltage, current, frequency, and active power. Alternatively, other parameters may be considered as criteria.

According to one embodiment, the at least one predetermined SCR interval comprises: a first predetermined SCR interval wherein the SCR is above a first predetermined SCR value SCR₁, and a second predetermined SCR interval wherein the SCR is below a second predetermined SCR value SCR₂. If an effective range of the SCR is within the first predetermined SCR interval, the active power saturation limit is based at least on the first active power limit. If the effective range of the SCR is within the second predetermined SCR interval, the active power saturation limit is based at least on the second active power limit. According to a preferable yet non-limiting embodiment, the first predetermined SCR value SCR₁ is 0.5. According to a preferable yet non-limiting embodiment, the second predetermined SCR value SCR₂ is 1.5.

According to one embodiment, the first active power limit, *P*_{*lim*1}, is determined by ${P}_{lim 1} = \sqrt{{{S}_{avail}}^{2} - {{Q}_{g}}^{2}}$ wherein *S*ₐᵥₐᵢₗ = *S*_{rated}*V_{g}*/*V*_{rated}, wherein *V_{g}* represents the magnitude of the voltage at the PCC, *S*_{rated} represents the nominal value of the total power being exchanged at the PCC, *V*_{rated} represents the nominal value of the voltage at the PCC, and *Q_{g}* is the reactive power being exchanged between the VSC and the electrical power network via the PCC, wherein *Q_{g}* is determined based at least on a pre-filtered positive sequence of voltage *V_{g}* and current *I_{g}* measured at the PCC. The first active power limit is particularly advantageous as an active power saturation limit for an SCR above 0.5, as the control device is capable of controlling the converter to maintain synchronism without the use of a second active power limit.

According to one embodiment, the second active power limit, *P*_{*lim*2}, is determined by ${P}_{lim 2} = \frac{{R}_{g , est} {{V}_{g}}^{2}}{{{R}_{g , est}}^{2} + {{X}_{g , est}}^{2}} + \frac{{{V}_{g}}^{2}}{\sqrt{{{R}_{g , est}}^{2} + {{X}_{g , est}}^{2}}}$ wherein *R_{g,est}* is the estimated fundamental frequency resistance of the electrical power network, *X_{g,est}* is the estimated fundamental frequency reactance of the electrical power network, and *V_{g}* is the voltage at the PCC. The second active power limit is particularly advantageous as an active power saturation limit for an SCR equal to or below 1.5, as the control device is capable of controlling the converter to maintain synchronism, thereby preventing blackout. Thus, the control device may advantageously control the converter so that the transmission capability of active power can be utilized more effectively in a stable manner even for ultra-weak electrical power networks.

According to one embodiment, at least one parameter of the at least one parameter of the electrical power network is based at least on at least one locally measured parameter of the electrical power network measured at the PCC. In particular, the estimated fundamental frequency resistance and the estimated fundamental frequency reactance of the electrical power network may be estimated based on the at least one locally measured parameter of the electrical power network measured at the PCC. The at least one locally measured parameter of the electrical power network may e.g., be voltage, current, active power, reactive power, etc.

According to one embodiment, the SCR is determined as $SCR = \frac{1}{{Z}_{g}} = \frac{1}{\sqrt{{{R}_{g}}^{2} + {{X}_{g}}^{2}} / {Z}_{b}}$ wherein *Z_{g}* is the per-unit value of the fundamental frequency impedance of the electrical power network, *R_{g}* is the fundamental frequency resistance of the electrical power network, *X_{g}* is the fundamental frequency reactance of the electrical power network, and Z_{b} is the per unit value of the base impedance of the electrical power network. As an option, estimated values of fundamental frequency resistance and fundamental frequency reactance may be used to provide an approximate value for the SCR. This may allow the SCR to be determined much more rapidly than if relying on proper values of the fundamental frequency resistance and the fundamental frequency reactance of the electrical power network. This is particularly advantageous as it allows the control device to determine the SCR in real-time or near-real-time, thus allowing the control device to provide rapid control response of a converter for power support in the event of a fault of the electrical power network.

An electrical power network may be described in terms of weakness. Generally, the term "weakness" at a given point in a power system is related to the ability to transfer power in steady-state while maintaining adequate level of voltage and frequency stability. Short-circuit ratio is one way of quantifying the weakness of a power system. A study (Stability-Enhancing Measures for Weak Grids, Milestone 2 Report, Jayasinghe, G., Bahrani, B., Monash University, June 2021) characterizes a weak grid as a grid operating with a short-circuit power indicative of a SCR in an interval of 3 < SCR < 5 and a very weak grid as a grid operating with a short-circuit power indicative of a SCR in an interval SCR < 3.

An SCR in an interval of SCR≥5 may correspond to a strong electrical power network.

An SCR in an interval of 3≤SCR<5 may correspond to a weak electrical power network.

An SCR in an interval of 1≤SCR<3 may correspond to a very weak electrical power network.

An SCR in an interval of SCR<1 may correspond to an ultra-weak electrical power network.

According to one embodiment, the active power control circuit is configured to: determine a first frequency output based at least on the active power and the active power reference, wherein the frequency of the VSC is at least based on the first frequency output. The active power control circuit may comprise a first proportional integrator, PI, unit. The first PI unit may be configured to receive as input a difference between an active power reference for the active power and the active power and provide a frequency output. The first PI unit may be configured to combine a proportional action and an integral action to provide the frequency output. By the proportional action, the first PI unit may react to a present difference between the active power reference and the active power. By the integral action, the first PI unit may react to an accumulated difference between the active power reference and the active power over time. In a non-limiting example, the active power control circuit comprises a damping control unit which receives the active power as input and provides a frequency output based on damping coefficient. That is, the damping control unit may be configured to regulate the frequency based on active power. The first frequency output may be based on the frequency output of the first PI controller, the frequency output of the damping control unit, and a base frequency (e.g., corresponding to a fundamental frequency of 50 Hz or 60 Hz) of the electrical power network. The first frequency output may be determined as the sum of the frequency output of the first PI controller and the base frequency of the electrical power network (minus the frequency output of the damping control unit if implemented).

According to one embodiment, the active power limiter control circuit is configured to: determine a second frequency output based at least on the active power and the active power saturation limit; wherein the frequency of the VSC is at least based on a summation of the first frequency output and the second frequency change. The active power limiter control circuit may be configured to receive the active power and the active power saturation limit as input. In a non-limiting example, the active power limiter control circuit comprises a saturation unit and an addition unit. The saturation unit is configured to receive the active power as a first input and an active power limit as a second input. The second input is taken as the active power saturation limit. That is, the saturation unit sets an active power saturation limit for the active power. When the active power is equal to or less than the active power saturation limit, the saturation unit outputs the active power without modification. When the active power is larger than the active power saturation limit, the saturation unit outputs the corresponding active power saturation limit. The addition unit is configured to receive the active power output from the saturation unit as positive input. The addition unit is further configured to receive the active power as negative input. Accordingly, the addition unit provides a zero output when the active power is equal to or below the active power saturation limit. When the active power exceeds the active power saturation limit, the addition unit outputs a negative value representing the amount by which the input signal surpasses the active power saturation limit.

The active power limiter control circuit may also comprise a second PI unit. The second PI unit is configured to receive as input the output from the addition unit. The second PI unit may be configured to combine a proportional action and an integral action to provide the second frequency output. By the proportional action, the second PI unit reacts to, when receiving a non-zero input, a present difference between the active power saturation limit and the active power. By the integral action, the second PI reacts to, when receiving a non-zero input, an accumulated difference between the active power saturation limit and the active power over time.

The active power controller 21 may be configured to add the first frequency output and the second frequency output by an addition unit to provide the electromotive force frequency for the VSC. The active power controller 21 may be configured to convert the electromotive force frequency to an electromotive force phase.

According to one embodiment, the control device is configured to provide a VSC voltage reference to the VSC for controlling the VSC, wherein the internal frequency of the VSC is controlled by the VSC voltage reference. The VSC voltage reference may specify both a voltage magnitude reference and a voltage phase reference for the VSC. Thus, the control device may control the VSC accordingly in response to a fault resulting in a SCR drop.

According to one embodiment, the active power controller is configured to output an electromotive force phase for the VSC, and the control device is configured to determine the VSC voltage reference based at least on a VSC virtual electromotive force for the VSC, wherein the VSC virtual electromotive force is based at least on a electromotive force voltage and the electromotive force phase.

According to one embodiment, the control device further comprises: a virtual admittance unit configured to determine a current reference based at least on a voltage input multiplied with a virtual admittance, wherein the voltage input is based at least on a voltage difference between the VSC virtual electromotive force and the voltage at the PCC, wherein the virtual admittance is based at least on a virtual impedance between the VSC virtual electromotive force and said PCC.

According to a second aspect, a power supporting system is provided. The power supporting system comprises: a voltage source converter, VSC, configured to be electrically connectable to an electrical power network via a point-of-common-coupling, PCC, and a control device according to the first aspect or any embodiment thereof for controlling the VSC. The power supporting system may comprise a plurality of VSC. The control device may be configured to control the plurality of VSC individually. A VSC may be electrically connected or connectable to a renewable energy source, such as a solar farm or a wind farm (onshore or offshore).

According to one embodiment, the power supporting system is configured to provide power support to an electrical power network, wherein the electrical power network is configured to transmit electrical energy at high voltage (HV), medium voltage (MV), or low voltage (LV) between at least a first location and a second location. The first location may be a first substation, and the second location may be a second substation. The power supporting system may be arranged at a substation. The voltage at the point of common coupling (PCC) may be HV, MV, or LV. The electrical power network may comprise at least one power line for transmitting electrical energy, wherein the power line may include at least one conductor for transmitting a respective phase of electrical current.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads.

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries.

It should be understood that any one power line connected between the first substation and the second substation may be any one of a HV, MV, or LV power line.

According to one embodiment, the converter of the power supporting system is configured to electrically connect to an energy storage system (ESS) and/or operate as a static synchronous compensator (STATCOM). When electrically connected to the ESS, the converter is configured to charge or discharge the ESS to supply active power to the electrical power network or absorb excess power. When operating as a STATCOM, the converter is configured to provide reactive power compensation by injecting or absorbing reactive power to regulate the voltage at the point of common coupling (PCC). The converter may be configured to seamlessly transition between ESS and STATCOM operation modes based on network conditions, thereby enhancing grid stability, supporting voltage regulation, and improving power quality. Particularly, the converter may be configured to operate as an E-STATCOM (Enhanced STATCOM) by providing both reactive power support and active power support via the ESS.

According to one embodiment, the power supporting system is configured to provide power support to an electrical power network electrically connected to at least one renewable power generation source. Non-limiting examples of renewable power generation sources include wind farms (on-shore or off-shore), solar farms, and wave power farms. The power supporting system may be configured to provide grid-forming control of the electrical power network. When fluctuations occur in the output of the renewable power generation source, the power supporting system may supply or absorb power by either providing active power through an energy storage system (ESS) or regulating voltage with reactive power compensation. This power support stabilizes voltage and/or frequency within the electrical power network, facilitating the integration of renewable energy sources and improving overall grid stability. The power supporting system may seamlessly transition between different operational modes, such as providing reactive power compensation or supporting active power flows, depending on real-time network conditions. The electrical power network may be a power grid or a separate power network.

According to one embodiment, the power supporting system may be a first power supporting system, and is configured to exchange information with at least a second power supporting system electrically connected to the electrical power network for power coordination. That is, if the first power supporting system is limited in terms of (active and/or reactive) power output, the at least a second power supporting system may advantageously compensate for the power loss to promote power balance in the electrical power network based on the exchanged information. Each of the at least a second power supporting system may comprise a converter and a control device according to the first aspect or any embodiments thereof. The information being exchanged may comprise a value of the at least one active power limit, which at least one active power limit is being used by the control device of the first power supporting system. The information being exchanged may comprise: information regarding power availability (such as active power and/or reactive power); and/or information regarding the at least one parameter of the electrical power network (such as voltage, current, frequency, phase angle, SCR). Power coordination may advantageously mitigate fluctuations caused by renewable power sources like wind or solar. Power coordination may advantageously allow for power supporting systems to distribute power more efficiently, preventing unnecessary stress on any one individual power supporting system.

According to a third aspect, a method of controlling a voltage source converter, VSC, electrically connected to an electrical power network via a point of common connection, PCC, is provided. The method implemented by a control device, such as the control device according to the first aspect or any one embodiment thereof. The method comprises: when the electrical power network after a fault operates with a short-circuit power indicative of a short-circuit ratio, SCR, within at least one predetermined SCR interval, controlling an internal frequency of the VSC when an active power being exchanged between the VSC and the electrical power network via the PCC is equal to or below an active power saturation limit, and controlling the internal frequency to reduce the active power below the active power saturation limit when the active power is above the active power saturation limit. The active power saturation limit is based at least on one of at least one active power limit, each active power limit based at least on at least one parameter of the electrical power network.

The method may comprise at least one additional step based on the disclosure of the control device according to the first aspect or any embodiment thereof and/or based on the power supporting system according to the second aspect or any embodiment thereof.

According to a fourth aspect, a computer program is provided. The computer program comprises instructions which, when the program is executed by a computer, cause the computer to carry out the method according to the third aspect or any embodiments thereof.

According to a fifth aspect, a computer-readable storage medium is provided. The computer-readable storage medium comprises instructions which, when executed by a computer, cause the computer to carry out the method according to the third aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for the purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1a schematically illustrates a power supporting system according to some embodiments;
Fig. 1b illustrates a single-line diagram of a power supporting system according to some embodiments;
Figs. 2a-2b schematically illustrates a power supporting system according to some embodiments;
Figs. 2c-2e schematically illustrate different embodiments of a voltage source converter;
Fig. 3a schematically illustrates a control device according to some embodiments;
Fig. 3b schematically illustrates of a portion of the control device according to some embodiments;
Figs. 4a-4b schematically illustrate of a portion of the control device according to some embodiments;
Fig. 5a illustrates active and reactive power in an electrical power network in relation to a power angle according to some embodiments;
Fig. 5b illustrates a power angle of the intersection points under different electrical power network SCR conditions according to some embodiments;
Figs. 6a-6d illustrates an evolution over time of various parameters during a SCR drop from 4 to 0.6 when a VSC is controlled by a control device according to some embodiments;
Fig. 7 illustrates curves of active power in relation to power angle, and active power limits according to some embodiments, and
Figs. 8a-8d illustrates an evolution over time of various parameters during a SCR drop from 4 to 0.5 when a VSC is controlled by a control device according to some embodiments;
Fig. 9 illustrates a flow chart of a method of controlling a voltage source converter, VSC, according to some embodiments.

### Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

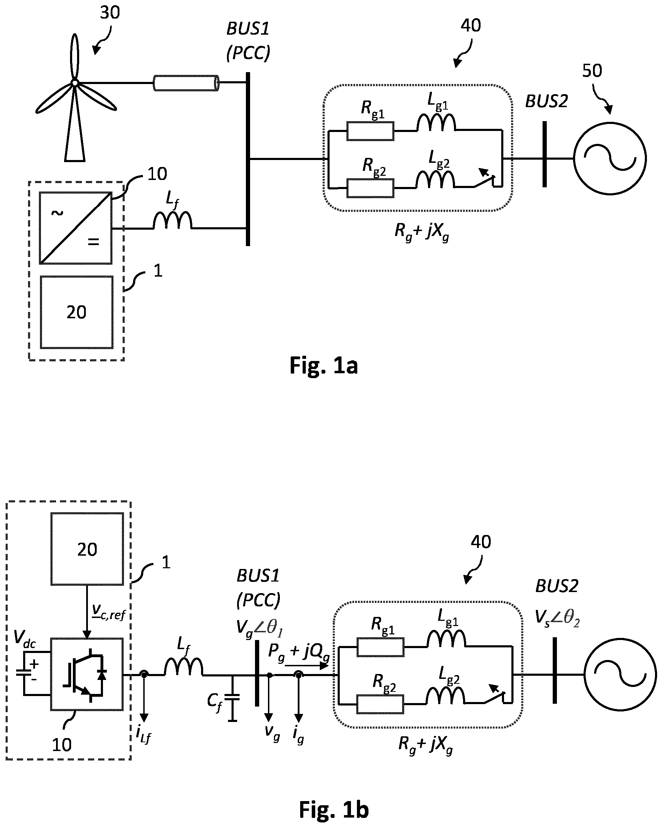

Fig. 1a schematically illustrates a power supporting system 1 according to some embodiments electrically connected to a first power generation source 30, such as a wind farm (on-shore or off-shore), and an electrical power network 40. The power supporting system 1 comprises a converter 10 and a control device 20. The converter 10 may be a voltage source converter, VSC. The control device 20 is configured to be communicatively connected to the converter 10. The control device 20 is configured to control the converter 10 according to an enhanced power control method that will be described in more detail in the following. The power supporting system 1, the first power generation source 30, and the electrical power network 40 are electrically connected via a first bus, BUS1. The first bus BUS1 may serve as a point of common connection, PCC, for e.g. the converter 10 of the power supporting system 1 and the electrical power network 40. The electrical power network 40 is further electrically connected to a second power generation source 50 via a second bus, BUS2. It should be noted that Fig.1 represents a simple schematic for illustrative purposes, and the electrical power network 40 may exhibit significantly greater complexity, with various additional components and subsystems electrically connected thereto.

As mentioned, the first power generation source 30 may be a wind farm. It should be understood that the first power generation source 30 may be other forms of power generation sources. However, in order to illustrate the enhanced power control method implemented by the control device 20, an electrical power network 40 that may become weak, very-weak, or ultra-weak is taken as an example. Such scenarios may occur with renewable power sources, such as wind farms. It should therefore be understood that while the enhanced power control method and control device 20 implementing the same are described in the context of an electrical power network 40 electrically connected to a wind farm, the method and control device 20 are not as such limited thereto. On the contrary, the method and control device 20 may be implemented to control a converter 10 electrically connected to any type of electrical power network 40 that may be subject to a fault rendering the electrical power network to be weak, very weak, and ultra-weak.

The terms weak, very-weak, and ultra-weak may correspond to a particular short-circuit ratio (SCR). For instance, a weak electrical power network may correspond to an SCR less than 5 but greater than or equal to 3. For instance, very-weak may correspond to an SCR less than 3 but greater than or equal to 1. For instance, ultra-weak may correspond to an SCR less than 1. It should be understood that these SCR values and intervals depend on the manner in which the SCR is calculated. As one example, the SCR may be determined as $SCR = \frac{1}{{Z}_{g}} = \frac{1}{\sqrt{{{R}_{g}}^{2} + {{X}_{g}}^{2}} / {Z}_{b}}$ wherein *Z_{g}* is a per-unit value of the fundamental frequency impedance of the electrical power network 40, *R_{g}* is the fundamental frequency resistance of the electrical power network, *X_{g}* is the fundamental frequency reactance of the electrical power network, and Z_{b} is the the base impedance of the power supporting system 1. These parameters of the electrical power network may be provided based on current and voltage measurements at the PCC. Voltage measurements may be obtained using Voltage Transformers (VTs) or resistive dividers. Current measurements may be captured via Current Transformers (CTs), Hall-effect sensors, or Rogowski coils. The electrical parameters, such as active power, reactive power, resistance, reactance, etc. may be determined based on the measured currents and voltages at the PCC.

As mentioned, the electrical power network 40 is electrically connected with the first power generation source 30 via the first bus BUS1. The first power generation source 30 is configured to convert some form of energy to electrical energy. As an example, if the first power generation source 30 is a wind farm, then the wind farm may comprise at least one wind turbine configured to convert wind energy into electrical energy. It should however be understood that the first power generation source 30 may be a solar farm or a wave power farm. The output of the first power generation source 30 is coupled to BUS1 via a cable, enabling the transmission of generated electrical power to the converter 10 and the electrical power network 40. In some embodiments, the converter 20 is configured to condition the electrical power received from the first power generation source 30, for example, by performing voltage regulation, frequency adjustment, or harmonic filtering, to ensure compliance with requirements of the electrical power network or to improve, preferably optimize, power transmission characteristics.

The power supporting system 1 comprises a converter. According to one non-limiting example, the converter may be configured to operate as a static synchronous compensator, STATCOM, configured to inject or absorb reactive power. In such a case, the converter is configured to exchange reactive power with the electrical power network. The converter may inject reactive power to raise the voltage at the PCC or absorb reactive power to lower the voltage at the PCC, thereby regulating voltage levels and enhancing grid stability. The control device may be configured to dynamically adjust the reactive power output based on voltage measurements at the PCC. According to one non-limiting example, the power supporting system 1 may comprise an energy storage system, ESS, electrically connected to the converter 10. The ESS may comprise at least one energy storage module, such as a battery bank, a supercapacitor, or a flywheel, for storing energy. The converter may thus be configured to exchange both active power and/or reactive power with the electrical power network via the PCC. The system may inject active power into the network during periods of low generation or high demand, and absorb active power to charge the ESS when excess power is available.

In e.g., Fig. 1a, the electrical power network 40 is schematically illustrated with two parallel power lines. Each power line is characterizable by a resistance R_{g1}, R_{g2} and an inductance L_{g1}, L_{g2}. Each power line impacts an impedance of the electrical power network 40. When no fault is present, the electrical power network is characterizable in terms of a grid impedance Z_{g} which may be expressed in terms of a resistive part R_{g} and an reactive part X_{g}, i.e., Z_{g} = R_{g} + jX_{g}.

In the event of a fault in one of the power lines within the electrical power network 40, the impedance of the electrical power network 40 may be perturbed from the grid impedance Z_{g}, resulting in that the electrical power network 40 may operate with a short-circuit power indicative of a short-circuit ratio within at least one predetermined SCR interval characterizing the electrical power network 40 as weak, very weak, or ultra-weak. In particular, when the electrical power network 40 becomes ultra-weak, it is significantly more susceptible to instability, both in terms of loss of synchronization and voltage instability. In order to maintain a power angle stability and synchronicity, the converter 10 is subsequently controlled by the control device 20 according to the enhanced power control method to stabilize the post-fault power system.

Fig. 1b schematically illustrates a power supporting system 1 according to some embodiments. The power supporting system 1 comprises a converter. The converter may be a semiconductor-based converter. That is, the converter may comprise at least one semiconductor device, such as an IGBT, MOSFET, IGCT or gate turn-off thyristor, for switching and controlling electrical power. The converter 10 may be electrically connected to a DC voltage source V_{dc} to provide electrical power to any actively controlled semiconductor devices of the semiconductor-based converter. The power supporting system 1 comprises a control device 20. The control device 20 may be configured to provide a control signal to the converter 10 for controlling an operation thereof. As a non-limiting example, the control signal may be a voltage reference. The voltage reference may be a complex voltage reference, indicating both a voltage reference and a phase reference for the converter.

The converter 10 may be configured to operate as a grid-forming converter. That is, the converter 10 may be configured to set and maintain a voltage amplitude and a frequency at the point of common connect, PCC, which other devices and systems electrically connected to the PCC can then synchronize with. The converter 10 may be configured to mimic an inertial response of a synchronous generator, helping stabilize frequency fluctuations in low-inertia grids (like those with relatively high renewable power supply). The converter 10 may be configured to adjust power provision during faults or disturbances, helping stabilize weak, very-weak, or ultra-weak electrical power networks. In the event of a blackout, the converter 10 may be configured to energize a de-energized electrical power network.

The system schematically illustrated in Fig. 1b, i.e., the power supporting system 1 and the electrical power network 40, may be characterized in terms of at least one parameter. For instance, the power supporting system 1 is electrically connected to the electrical power network 40 via a first bus BUS1. The voltage v_{g} at the first bus BUS1 has a first phase θ₁. The electrical power network 40 is also electrically connected to a second bus BUS2. The voltage vₛ at the second bus BUS2 has a second phase θ₂ typically different from the first phase θ₁. Moreover, the system is illustrated having a filter reactor, e.g. represented by an inductor, L_{f}, between the power supporting system 1 and the first bus BUS1 and a capacitor C_{f} between the first bus BUS1 and electrical ground potential. A filter current may be measured via a CT. The voltage v_{g} and the current i_{g} at the first bus BUS1 may be measured via a VT and a CT respectively. The converter 10 is configured to exchange power with the electrical power network 40 via the PCC, which power is P_{g} + jQ_{g}, wherein P_{g} represents the active power and Q_{g} represents the reactive power.

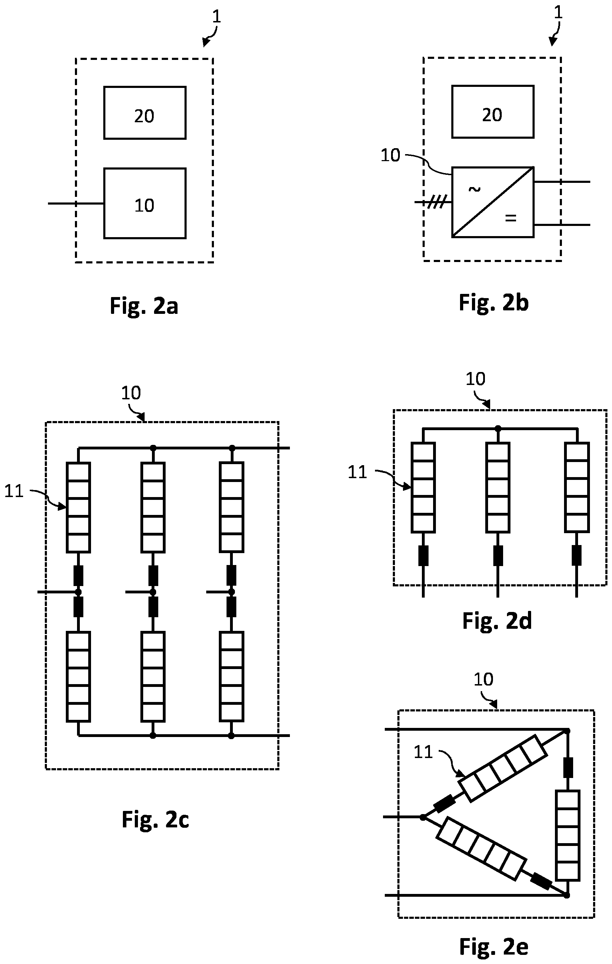

Figs. 2a-2e schematically illustrate power supporting systems 1 or components thereof according to some embodiments. The control device 20 according to any embodiment of the present disclosure may be used to control the converter 10, such as a VSC, electrically connected or electrically connectable to the electrical power network 40. As mentioned, the VSC 10 and the control device 20 may together be comprised in a power supporting system 1 for supporting an electrical power network in terms of complex power (active power and/or reactive power), frequency, voltage, current, etc., as needed. However, the control device 20 is not as such limited with respect to the VSC 10 it is configured to control. For instance, the VSC 10 may be adapted as a monolithic VSC (see Fig. 2b) or as a multi-level converter, MMC, based VSC (see Figs. 2c-2e). A monolithic VSC may refer to a VSC implementing a single integrated unit with a centralized design with a few large semiconductor devices (e.g., IGBTs or MOSFETs) to handle high voltages and currents. A MMC-based VSC may refer to a VSC that implements a modular architecture, where the VSC is composed of multiple submodules arranged in series in each phase leg. The MMC-based VSC 10 may be designed as a YY-MMC VSC (see Fig. 2c), a Y-connected chain-link VSC (see Fig. 2d), or a D-connected chain-link VSC (see Fig. 2e).

For high-voltage direct current applications, a MMC-based VSC may be preferred. As seen in Figs. 2c-2e, the MMC-based VSC 10 may comprise cells 11 arranged in respective arms as a plurality of series-connected cells 11, the number of arms being dependent on the number of phases of the power grid. As a non-limiting example, the VSC 10 may comprise three arms, each arm corresponding to a respective phase, each arm comprising a plurality of series-connected cells 11. The cells 11 of an arm of the VSC 10 may however be arranged as a plurality of series- and parallel connected cells 11. The power supporting system 1 is electrically connected or electrically connectable to a power grid. Each cell of the VSC 10 may be configured to store and provide energy depending on how the VSC is operated.

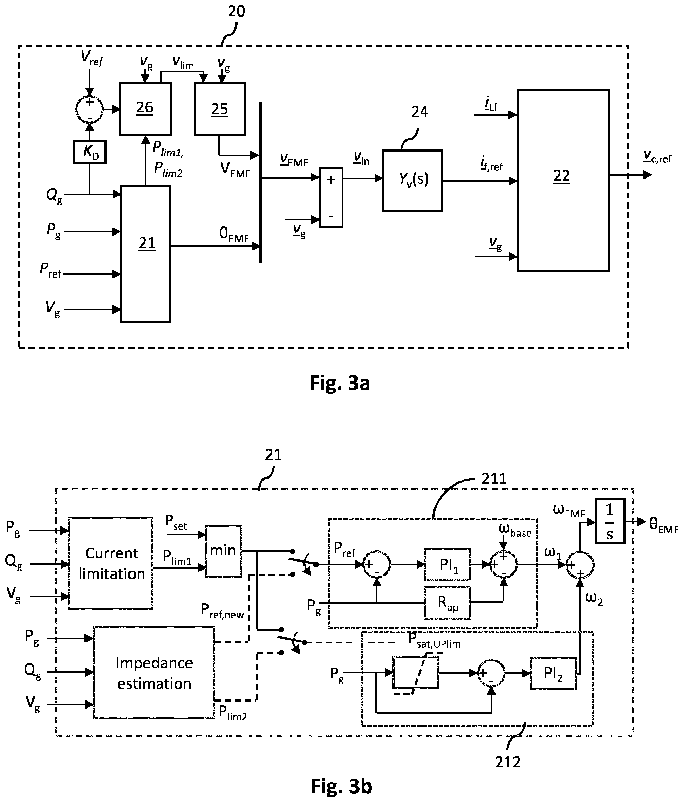

Fig. 3a schematically illustrates the aforementioned control device 20 according to some embodiments. The control device 20 is configured to control the converter 10, such as a VSC, according to an enhanced power control method. The control device 20 comprises an active power loop controller 21 for implementing at least a portion of the enhanced power control method. The active power loop controller 21 is configured to determine an electromotive force phase *θ_{EMF}* for the converter 10 based at least on one parameter of the electrical power network 40. That is, the active power loop controller 21 regulates active power by adjusting the electromotive force phase *θ_{EMF}.* Typically, the active power being exchanged between the VSC 10 and the electrical power network 40 at the PCC may be described by the following formula ${P}_{g} = \frac{{V}_{g} {V}_{s}}{X} sin \left({θ}_{2}-{θ}_{1}\right)$ wherein *V_{g}* is the voltage at the PCC (BUS1), *Vₛ* is the voltage of the electrical power network (BUS2), and *θ*₂ - *θ*₁ is the phase difference between the voltage *V_{g}* at the PCC and the voltage *Vₛ* of the electrical power network. The voltage *V_{g}* at the PCC is generally the difference between an electromotive force voltage *V_{EMF}* of the VSC and a voltage drop over a virtual impedance between the VSC electromotive force *V_{EMF}* and the PCC. The phase *θ*₁ is generally the electromotive force angle *θ_{EMF}* of the VSC adjusted by a phase shift due to the virtual impedance between the VSC electromotive force *V_{EMF}* and the PCC. It should be understood that the phase difference results in a max transmission of active power *P_{g}* at a phase difference of e.g., 90 degrees, and a minimum transmission of active power *P_{g}* at a phase difference of e.g., 180 degrees. This phase difference may be regulated by increasing or decreasing the electromotive force angle *θ_{EMF}.*

According to one non-limiting example, the control device 20 comprises a voltage controller 25. The voltage controller is configured to determine a voltage magnitude V_{EMF} of an electromotive force *V_{EMF}* of the VSC. The voltage controller 25 may be configured to receive as input the voltage *V_{g}* at the PCC. This allows the voltage controller 25 to receive feedback in the form of the voltage *V_{g}* at the PCC with regards to the electromotive force *V_{EMF}* of the VSC provided by the voltage controller 25 and may adjust the voltage magnitude accordingly.

In one exemplary embodiment, the control device 20 is configured to limit a current between the VSC 10 and the electrical power network 40 via the PCC. The control device 20 may comprise a current controller 22 for providing current tracking and limitations. The current controller 22 may be configured to regulate a current between the VSC 10 and the electrical power network 40 via the PCC based on a current reference *i*_{f,ref} for a current *i*_{Lf} between the VSC and the electrical power network 40 via the PCC. The current controller 22 may be configured to receive as input the current reference *i*_{f,ref} and output a voltage reference *v*_{c,ref} based on the current reference *i*_{f,ref}. The current controller 22 may be configured to receive as input the current reference *i*_{f,ref} and the current *i*_{Lf} between the VSC 10 and the electrical power network 40 via the PCC, and control the current *i*_{Lf} between the VSC and the electrical power network 40 based on a difference between the current reference *i*_{f,ref} and the current *i*_{Lf} via the voltage reference *v*_{c,ref}. The current controller 22 may be configured to continuously or repeatedly adjust the voltage reference to reduce a difference between the current and the current reference. The voltage reference may be determined as ${v}_{c , ref} = {v}_{g} + Z \left({i}_{ref}-{i}_{Lf}\right)$ wherein Z is the impedance between the VSC and the voltage at the PCC. The current controller 22 may be configured to obtain the impedance Z as input or determine the impedance Z based on at least one other input. The impedance Z may be based on a filter, which is located between the VSC and the PCC. The filter can consist of a filter reactor.

The control device 20 may comprise a virtual admittance unit configured to determine the reference current *i_{ref}* based on a voltage *vᵢₙ* corresponding to a difference between the electromotive force *V_{EMF}* of the VSC and the voltage *v_{g}* at the PCC. The reference current *i_{f,ref}* may be determined as ${i}_{f , ref} = {Y}_{v} {v}_{in}$ wherein *Yᵥ* may be a dynamically adjustable virtual admittance and *vᵢ,* is the voltage difference between the electromotive force *v_{EMF}* of the VSC and the voltage *v_{g}* at the PCC. That is, the virtual admittance *Yᵥ* is not necessarily a fixed value but can be adjusted by the virtual admittance unit to influence the control of the VSC 10. The virtual admittance unit 24 may function similarly to a control gain that determines how much current should flow based on the voltage difference. The virtual admittance unit can adjust the virtual admittance to stabilize the electrical power network 40 or optimize performance thereof based on operating conditions (e.g., grid strength, load changes, or faults). For example, if the electrical power network 40 is experiencing a fault resulting in the electrical power network 40 becoming weak, very weak, or ultra-weak, a lower virtual admittance *Yᵥ* may be used to prevent large current fluctuations. Conversely, if the electrical power network is strong (e.g., SCR > 5), a higher virtual admittance *Yᵥ* might be used to increase responsiveness.

As mentioned, the control device 20 comprises an active power loop controller 21 configured to determine an electromotive force angle *θ_{EMF}.* The active power loop controller 21 may be configured to receive as input a reactive power *Q_{g}*, an active power *P_{g},* an active power reference *P_{ref}* for the active power *P_{g}*, and a voltage *V_{g}* at the PCC. The active power loop controller 21 may be configured to determine at least one active power limit *P*_{*lim*1}, *P*_{*lim*2} which will be detailed in the following. The active power loop controller 21 may be configured to output at least one active power limit *P*_{*lim*1}, *P*_{*lim*2} to a voltage limiting controller 26. The voltage limiting controller 26 may be configured to determine a voltage limit *vₗᵢₘ* based on the at least one active power limit *P*_{*lim*1}, *P*_{*lim*2} and the voltage at the PCC. Optionally, the voltage limiting controller 26 may be configured to receive, directly or indirectly, a voltage reference as an input. The voltage limiting controller 26 may be configured to output the voltage limit *vₗᵢₘ* to the voltage controller 25, which may in turn be configured to determine the electromotive force voltage magnitude based on the voltage limit *vₗᵢₘ*. The voltage reference v_{ref}, before being received by the voltage limiting controller 26, may be adjusted based on a reactive power Q_{g} being exchanged between the VSC and the PCC. Specifically, the voltage limiting controller 26 may receive as input a difference between the voltage reference v_{ref} and a voltage droop based on the reactive power Q_{g} scaled by a factor K_{D}.

An example embodiment of the active power loop controller 21 is schematically illustrated in Fig. 3b. The active power loop controller 21 comprises an active power control circuit 211. The active power loop controller 21 comprises an active power limiter control circuit 212. The active power loop controller 21 is configured as follows. When the electrical power network 40 after a fault operates with a short-circuit power indicative of a short-circuit ratio, SCR, within at least one predetermined SCR interval (indicative of a weak, very-weak, or ultra-weak electrical power network), and when an active power P_{g} being exchanged between the VSC and the electrical power network 40 via the PCC is equal to or below an active power saturation limit P_{sat_UPlim}, the active power loop controller 21 is configured to control an internal frequency ω_{EMF} of the VSC 10 via the active power control circuit 211. The active power loop controller 21 is further configured to control the internal frequency ω_{EMF} via the active power control circuit 211 and the active power limiter control circuit 212 to reduce the active power P_{g} below the active power saturation limit P_{sat_UPlim} when the active power P_{g} is above the active power saturation limit P_{sat_UPlim}. The active power saturation limit P_{sat_UPlim} is based at least on one of at least one active power limit Pₗᵢₘ₁, Pₗᵢₘ₂, each active power limit based at least on at least one parameter I_{g}, V_{g}, P_{g}, Q_{g} of the electrical power network 40.

The active power controller circuit 211 is configured to determine a first frequency output ω₁ based at least on an active power P_{g} being exchanged between the VSC 10 and the electrical power network 40 via the PCC and an active power reference P_{ref} for the active power P_{g}. The active power controller circuit 211 may be configured to receive the active power P_{g} and the active power reference P_{ref} as input. In a non-limiting example, the active power controller circuit 211 comprises a first proportional-integral, PI, unit PI₁. The first PI unit PI₁ receives as input a difference between the active power reference P_{ref} and the active power P_{g} and provide a frequency output. The first PI unit PI₁ combines a proportional action and an integral action to provide the frequency output. By the proportional action, the first PI unit PI₁ reacts to a present difference between the active power reference P_{ref} and the active power P_{g}. By the integral action, the first PI PI₁ reacts to an accumulated difference between the active power reference P_{ref} and the active power P_{g} over time. In a non-limiting example, the active power circuit 211 comprises a damping control unit Rₐₚ which receives the active power P_{g} as input and provides a frequency output based on damping coefficient Rₐₚ. That is, the damping control unit Rₐₚ regulates the frequency based on active power P_{g}. The first frequency output ω₁ may be based on the frequency output of the first PI controller PI₁, the frequency output of the damping control unit Rₐₚ, and a base frequency ω_{b} (e.g., corresponding to a fundamental frequency of 50 Hz or 60 Hz) of the electrical power network 40. The first frequency output ω₁ may be determined as the sum of the frequency output of the first PI controller PI₁ and the base frequency ω_{b} of the electrical power network 40 minus the frequency output of the damping control unit Rₐₚ.

The active power limiter control circuit 212 may be configured to determine a second frequency output ω₂ based at least on the active power P_{g} and the active power saturation limit P_{sat_UPlim}. The active power limiter control circuit 212 may be configured to receive the active power P_{g} and the active power saturation limit P_{sat_UPlim} as input. In a non-limiting example, the active power limiter control circuit 212 comprises a saturation unit and an addition unit. The saturation unit is configured to receive the active power P_{g} as a first input and a combination of an active power setpoint Pₛₑₜ and active power limits , Pₗᵢₘ₁, and Pₗᵢₘ₂ as a second input. The second input is taken as the active power saturation limit P_{sat_UPlim}. That is, the saturation unit sets an active power saturation limit P_{sat_UPlim} for the active power P_{g}. When the active power P_{g} is equal to or less than the active power saturation limit P_{sat_UPlim}, the saturation unit outputs the active power P_{g} without modification. When the active power P_{g} is larger than the active power saturation limit P_{sat_UPlim}, the saturation unit outputs the corresponding active power saturation limit P_{sat_UPlim}.

The addition unit is configured to receive the active power output from the saturation unit as positive input. The addition unit is further configured to receive the active power P_{g} as negative input. Accordingly, the addition unit provides a zero output when the active power P_{g} is equal to or below the active power saturation limit P_{sat_UPlim}. When the active power P_{g} exceeds the active power saturation limit P_{sat_UPlim}, the addition unit outputs a negative value representing the amount by which the input signal surpasses the active power saturation limit P_{sat_UPlim}.

The active power limiter control circuit 212 may also comprise a second PI unit PI₂. The second PI unit PI₂ is configured to receive as input the output from the addition unit. The second PI unit PI₂ combines a proportional action and an integral action to provide the second frequency output ω₂. By the proportional action, the second PI unit PI₂ reacts to, when receiving a non-zero input, a present difference between the active power saturation limit P_{sat_UPlim} and the active power P_{g}. By the integral action, the second PI reacts to, when receiving a non-zero input, an accumulated difference between the active power saturation limit P_{sat_UPlim} and the active power over time P_{g}.

The first frequency output ω₁ and the second frequency output ω₂ are then added by an addition unit, and the output thereof provides the electromotive force frequency ω_{EMF} for the VSC 10. The control device 20 comprises a frequency-phase conversion unit (indicated by the block $\frac{1}{s}$) configured to receive the electromotive force frequency ω_{EMF} for the VSC and convert it to the aforementioned electromotive force phase θ_{EMF}. As the active power limiter control circuit 212 is configured to only provide a non-zero output when the saturation unit provides the active power saturation limit P_{sat_UPlim}, which consequently results in a negative input to the second PI unit PI₂, it follows that the second frequency output ω₂ corresponds to a negative frequency shift. Therefore, it can be said that the active power limiter control circuit 212 decelerates a frequency of the VSC 10 when the active power P_{g} is above the active power saturation limit P_{sat_UPlim}. When the active power P_{g} is equal to or below the active power saturation limit P_{sat_UPlim}, the active power limiter control circuit 212 provides no non-zero frequency shift. In other words, the active power limiter control circuit 212 has no impact on the control of the VSC when the active power P_{g} is below the active power saturation limit P_{sat_UPlim}.

The active power saturation limit P_{sat_UPlim} of the saturation unit of the active power limiter control circuit 212 is determined based on an active power limit input of the active power limiter control circuit 212. The active power limit input may be switched between at least two different active power limits, such as a first active power limit Pₗᵢₘ₁ and a second active power limit Pₗᵢₘ₂. Optionally, adjustable active power setpoint Pₛₑₜ may be used.

The first active power limit Pₗᵢₘ₁ may be based at least on a current limitation of a current *i*_{f} between the VSC 10 and the electrical power network 40 via the PCC. As a non-limiting example, the first active power limit *P*_{*lim*1} is determined by ${P}_{lim 1} = \sqrt{{{S}_{avail}}^{2} - {{Q}_{g}}^{2}}$ wherein *S*ₐᵥₐᵢₗ = *S*_{rated}*V_{g}*/*V*_{rated}, wherein *V_{g}* represents the magnitude of the voltage at the PCC, *S*_{rated} represents the nominal value of the total power being exchanged at the PCC, *V*_{rated} represents the nominal value of the voltage at the PCC, and *Q_{g}* is the reactive power being exchanged between the VSC and the electrical power network via the PCC, wherein *Q_{g}* is determined based at least on a pre-filtered positive sequence of voltage *V_{g}* and current *I_{g}* measured at the PCC.

The second active power limit Pₗᵢₘ₂ may be based at least on an impedance estimation of an impedance of the electrical power network 40. The second active power limit (*P*_{*lim*2}) is determined by ${P}_{lim 2} = \frac{{R}_{g , est} {{V}_{g}}^{2}}{{{R}_{g , est}}^{2} + {{X}_{g , est}}^{2}} + \frac{{{V}_{g}}^{2}}{\sqrt{{{R}_{g , est}}^{2} + {{X}_{g , est}}^{2}}}$ wherein *R_{g,est}* is the estimated fundamental frequency resistance of the electrical power network, *X_{g,est}* is the estimated fundamental frequency reactance of the electrical power network, and *V_{g}* is the voltage at the PCC.

Different active power limits may be more suitable as active power limit inputs for the active power controller limit circuit 212 to provide a desired response to a fault. The control device 20 may be configured to switch which of the at least two active power limits are received as the active power limit input of the active power controller limiter circuit 212. This advantageously allows the control device 20 to control the VSC more appropriately in response to different faults of the electrical power network 40.

The at least one active power limit are based at least on one parameter (V_{g}, P_{g}, Q_{g}) of the electrical power network (40). At least one parameter of the at least one parameter I_{g}, V_{g}, P_{g}, Q_{g} of the electrical power network 40 is based at least on at least one locally measured parameter V_{g}, I_{g} of the electrical power network 40 measured at the PCC. Thus, the enhanced power control method does not necessarily rely on electrical parameters that are not readily available. By adapting the enhanced power control method to be based on locally measured parameters (i.e., local with respect to the converter and a control device for controlling the converter), the enhanced power control method may be much more responsive to faults of the electrical power network 40, thus adapting the active power transmission to a more desirable target post-fault until the fault is remedied.

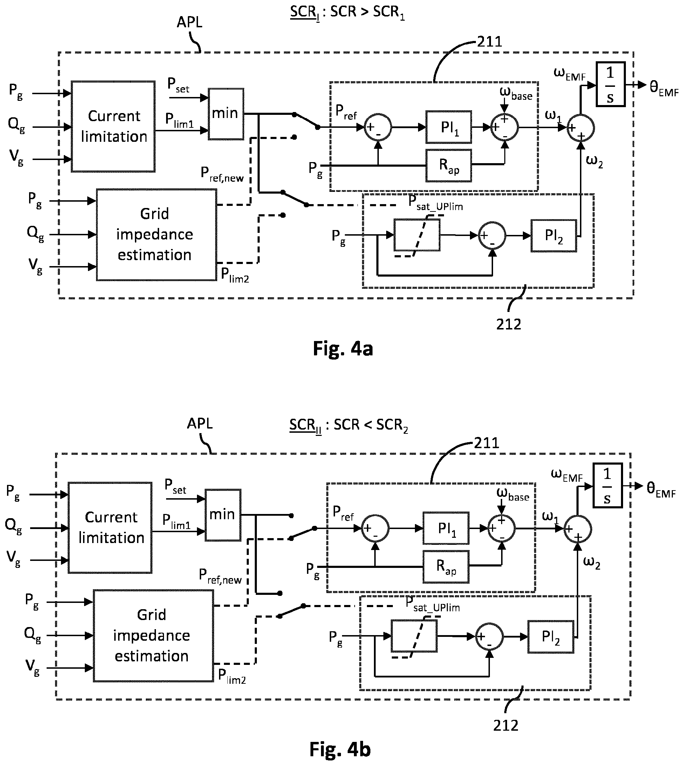

The enhanced power control method may respond differently in response to different values of SCR. That is, the active power saturation limit P_{sat_UPlim} may be based on different control principles depending on different values of SCR. Figs. 4a-4b schematically illustrates different configurations of the control device. In Fig. 4a, the control device 20 is configured so that the active power controller circuit 211 receives as the active power reference input the smaller of a predetermined setting of active power Pₛₑₜ and the first active power limit Pₗᵢₘ₁, which first active power limit Pₗᵢₘ₁ may be received by a current limitation unit. Moreover, the active power limiter control circuit 212 receives as active power saturation limit input the same input as the active power controller circuit 211. In Fig. 4b, the control device 20 is configured so that the active power controller circuit 211 receives as the active power reference input a new active power reference P_{ref,new} from an impedance estimation unit. Moreover, the active power limiter control circuit 212 receives as active power saturation limit P_{sat_UPlim} the second active power limit Pₗᵢₘ₂.

The first active power limit Pₗᵢₘ₁ may be used for a fault resulting in an effective range of the SCR within a first predetermined SCR interval (such as SCR ≥ 0.5). The first predetermined SCR interval may defined by any SCR value equal to or greater than a first predetermined SCR value SCR1 (such as SCR = 0.5). It should be understood that the first predetermined SCR value SCR1 may be selected to a great variety of values, optionally tuned accordingly for improved performance of the VSC and the electrical power network during a fault. As a non-limiting example, the first predetermined SCR value SCR1 may be equal to 0.5.

The second active power limit Pₗᵢₘ₂ may be used for a fault resulting in an effective range of the SCR within a second predetermined SCR interval (such as SCR ≤ 1.5. The second predetermined SCR interval may defined by any SCR value equal to or smaller than a second predetermined SCR value SCR2 (such as SCR = 1.5). It should be understood that the second predetermined SCR value SCR2 may be selected to a great variety of values, optionally tuned accordingly for improved performance of the VSC and the electrical power network during a fault. As a non-limiting example, the second predetermined SCR value SCR2 may be equal to 1.5.

As there may be an overlap between the first predetermined SCR interval SCR_{I} and the second predetermined SCR interval SCR_{II}, the control device 20 may be configured to prioritize one of active power limit over the other for an overlapping SCR interval based on at least one criteria. For instance, in response to a SCR transient drop into the at least one predetermined SCR interval SCR_{I}, SCR_{II}, the active power saturation limit P_{sat_UPlim} is initially based at least on the first active power limit Pₗᵢₘ₁. That is, the active power controller limiter circuit 212 may use the first active power limit Pₗᵢₘ₁ initially, and then switch to the second active power limit Pₗᵢₘ₂ when the estimated post-fault SCR falls in the SCR interval SCR_{II}.

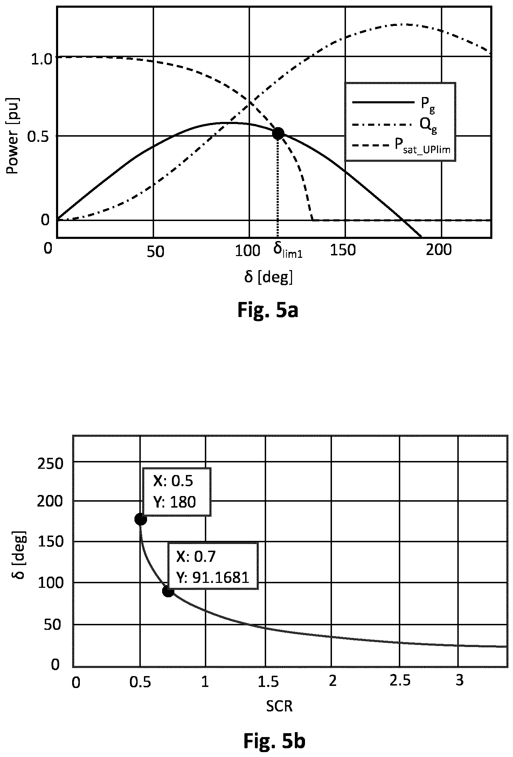

Fig. 5a illustrates active and reactive power in an electrical power network in relation to a power angle according to some embodiments. In Fig. 5a, the vertical axis represents an amount of power in terms of unit per base power. The horizontal axis represents a power angle in degrees. The active power P_{g} being exchanged between the VSC 10 and the electrical power network 40 is illustrated with a solid line, the reactive power Q_{g} exchanged between the VSC 10 and the electrical power network 40 is illustrated with a dashed-dotted line, and the active power saturation limit P_{sat_UPlim} (which is based at least on the first active power limit Pₗᵢₘ₁) is illustrated with a dashed line. As the power angle δ changes from a first stable power angle, the respective amounts of active power P_{g} and reactive power Q_{g} changes. At a first critical power angle δₗᵢₘ₁, the active power P_{g} is equal to the active power saturation limit P_{sat_UPlim}. For power angles δ below this first critical power angle δₗᵢₘ₁, the active power P_{g} will be lower than the active power saturation limit P_{sat_UPlim}, in which case the active power controller circuit 211 will accelerate a frequency of the VSC 10. For power angles δ above this first critical power angle δₗᵢₘ₁, the active power P_{g} will be higher than the active power saturation limit P_{sat_UPlim}, in which case the active power limiter control circuit 212 will decelerate a frequency of the VSC 10.

Fig. 5b illustrates a power angle of the intersection points under different electrical power network SCR conditions according to some embodiments. In Fig. 5a, the vertical axis represents the power angle. The horizontal axis represents the SCR. For a first fault in the electrical power network 40 resulting in a SCR of 0.5, the intersection point between the active power and the active power saturation limit occurs at a power angle of 180 degrees. For a second fault in the electrical power network 40 resulting in a SCR of 0.7, the intersection point between the active power P_{g} and the active power saturation limit P_{sat_UPlim} occurs at a power angle of approximately 91.2 degrees.

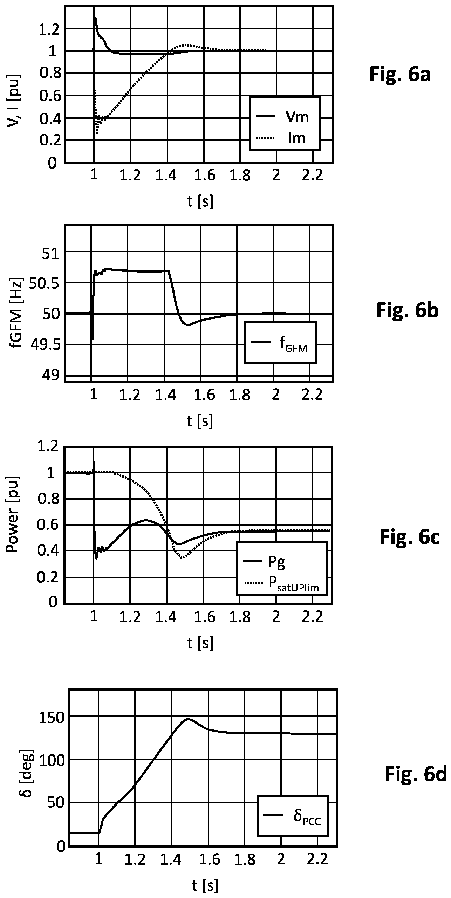

Figs. 6a-6d illustrates an evolution over time of various parameters during an SCR drop from 4 to 0.6 when a VSC is controlled by a control device according to some embodiments, wherein the active power saturation limit P_{sat_UPlim} is based at least on the first active power limit Pₗᵢₘ₁. In all Figs 6a-6d, the horizontal axis represents time t.

In Fig. 6a, the vertical axis represents voltage magnitude or current magnitude in p.u. The voltage magnitude Vₘ of the voltage at the PCC is illustrated with a solid line. The current magnitude Iₘ of a current at the PCC is illustrated with a dashed line. At a time t = 1s, the electrical power network experiences a fault resulting in a transient SCR drop from a SCR value of 4 to a SCR value of 0.6. The voltage magnitude and the current magnitude deviate from 1 p.u. but due to the enhanced power control method, the control device 20 is capable of restoring the voltage magnitude and current magnitude to 1 p.u. on a time scale of seconds.

In Fig. 6b, which illustrates grid forming frequency over time, it can be seen that the grid forming frequency is boosted to slightly above 50.5 Hz until the control device 20 at a time point after 1.4 s controls the frequency of the converter to reduce the grid forming frequency down to the pre-fault grid forming frequency of 50 Hz.

In Fig. 6c, which illustrates active power Pg and the active power saturation limit over time, it can be seen that at the time point of the fault (i.e., t = 1 s), the active power P_{g} drops significantly and ripples, indicating a large disturbance. Likewise, the active power saturation limit drops over time. At the time point after 1.4 s, the active power P_{g} is larger than the active power saturation limit, which results in that the control device attempts to decelerate a frequency of the converter 10 (as evidenced by Fig. 6b). This reduction in frequency allows the active power to stabilize at a reduced level compared to pre-fault level.

Fig. 6d illustrates the power angle δ_{PCC} for the exchange of power between the converter 10 and the electrical power network 40 via the PCC. It can be seen in Fig. 6d that the power angle pre-fault is at approximately 10-15 degrees. However, due to the fault, power angle instability occurs, and the power angle increases to a maximum power angle of approximately 145 degrees in the interval of 1.4 s to 1.5 s, after which the control device 20 begins to reduce the frequency of the converter, thus allowing the power angle to stabilize at around 125-130 degrees.

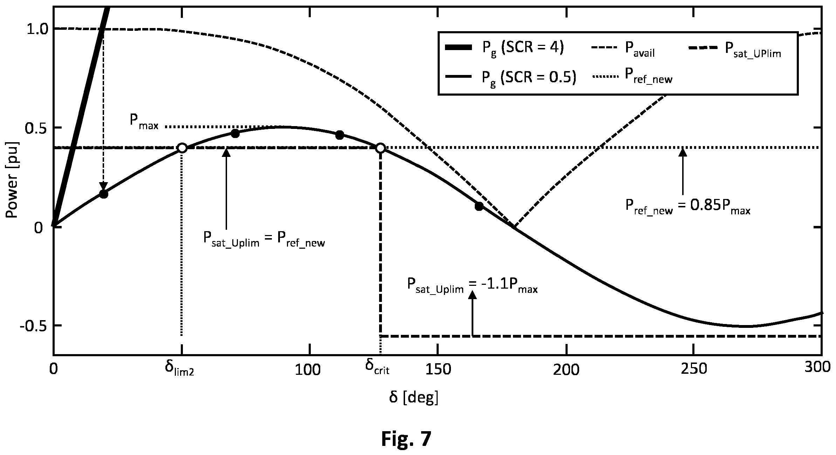

Fig. 7 illustrates curves of active power in relation to power angle, and active power limits according to some embodiments. In Fig. 7, the vertical axis represents an amount of power in terms of unit per base power. The horizontal axis represents a power angle δ in degrees. The active power P_{g} being exchanged between the VSC 10 and the electrical power network 40 at a SCR equal to 4 (pre-fault) is illustrated with a thick solid line. The active power P_{g} being exchanged between the VSC 10 and the electrical power network 40 at a SCR equal to 0.5 (post-fault) is illustrated with a thin solid line. Available active power Pₐᵥₐᵢₗ, i.e. the first active power limit Pₗᵢₘ₁ is illustrated with a thin dashed line. The active power saturation limit P_{sat_UPlim} of the active power limiter control circuit 212 when receiving the second active power limit Pₗᵢₘ₂ as active power saturation limit input is illustrated with a thick dashed line. Moreover, the new active power reference P_{ref,new} determined by the impedance estimation unit is illustrated with dotted line. A maximum power of the active power Pₘₐₓ is also indicated in Fig. 6. The new active power reference P_{ref,new} is determined as 0.85Pₘₐₓ. Also indicated is the second critical power angle δₗᵢₘ₂, wherein the active power P_{g} is equal to the new active power reference P_{ref,new} while the power angle slightly exceeds the second critical power angle δₗᵢₘ₂, the active power Pg exceeds the new active power reference P_{ref,new}. Also indicated is the third critical power angle δ_{crit} wherein the active power P_{g} is equal to the new active power reference P_{ref,new} while the power angle slightly exceeds the third critical power angle δ_{crit}, the active power Pg falls below the new active power reference P_{ref,new}. At the critical power angle δ_{crit}, the active power saturation limit P_{sat_UPlim} is determined as -1.1Pₘₐₓ. Thus, for power angles larger than the second power angle limit δₗᵢₘ₂, the active power limiter control circuit 212 will decelerate the frequency of the VSC 10.

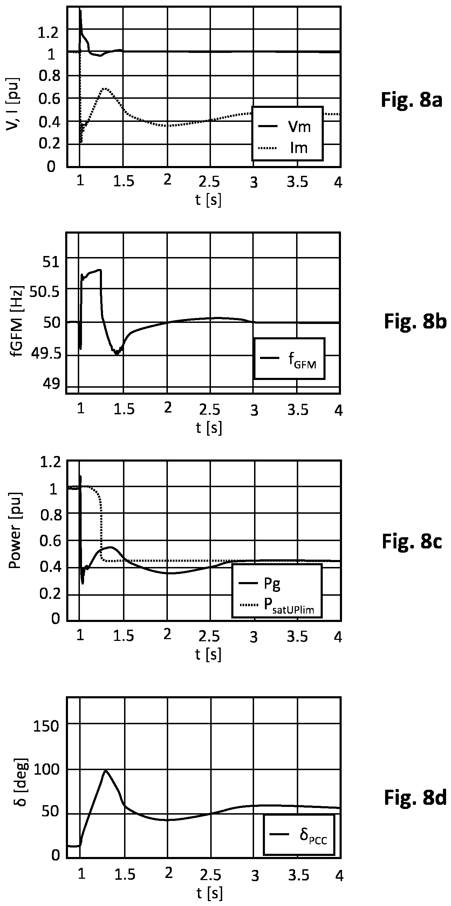

Figs. 8a-8d illustrates an evolution over time of various parameters during a SCR drop from 4 to 0.5 when a VSC is controlled by a control device according to some embodiments, wherein the active power saturation limit P_{sat_UPlim} is based at least on the second active power limit Pₗᵢₘ₂. In all Figs 8a-8d, the horizontal axis represents time t.

In Fig. 8a, the vertical axis represents voltage magnitude or current magnitude in p.u. The voltage magnitude Vₘ of the voltage at the PCC is illustrated with a solid line. The current magnitude Iₘ of a current at the PCC is illustrated with a dashed line. At a time t = 1s, the electrical power network 40 experiences a fault resulting in a transient SCR drop from a SCR value of 4 to a SCR value of 0.5. The voltage magnitude and the current magnitude deviate from 1 p.u. but due to the enhanced power control method, the control device 20 is capable of restoring the voltage magnitude to 1 p.u. and the current amplitude to about 0.45 p.u. on a time scale of seconds.

In Fig. 8b, which illustrates grid forming frequency over time, it can be seen that the grid forming frequency is boosted to slightly above 50.75 Hz until the control device 20 at a time point after 1.25 s controls the frequency of the converter to adjust the grid forming frequency to the pre-fault grid forming frequency of 50 Hz.

In Fig. 8c, which illustrates active power P_{g} and the active power saturation limit P_{sat_UPlim} over time, it can be seen that at the time point of the fault (i.e., t = 1 s), the active power P_{g} drops significantly and ripples, indicating a large disturbance. Likewise, the active power saturation limit P_{sat_UPlim} drops over time. At the time point after 1.25 s, the active power P_{g} is larger than the active power saturation limit P_{sat_UPlim}, which results in that the control device 20 attempts to control a frequency of the converter 10 (as evidenced by Fig. 8b). This frequency control allows the active power to stabilize at a reduced level compared to pre-fault level.

Fig. 8d illustrates the power angle δ_{PCC} for the exchange of power between the converter 10 and the electrical power network 40 via the PCC. It can be seen in Fig. 6d that the power angle pre-fault is at approximately 10-15 degrees. However, due to the fault, power angle instability occurs, and the power angle increases to a maximum power angle of approximately 100 degrees in the interval of 1.25 s to 1.30 s, after which the control device 20 begins to control the frequency of the converter, thus allowing the power angle to stabilize at around 60 degrees.

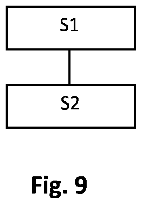

Fig. 9 illustrates a flow chart of a method of controlling a voltage source converter, VSC, according to some embodiments. The method is implemented by a control device. The method comprises: when the electrical power network 40 after a fault operates with a short-circuit power indicative of a short-circuit ratio, SCR, within at least one predetermined SCR interval SCR_{I}, SCR_{II}, controlling S1 an internal frequency ω_{EMF} of the VSC 10 when an active power P_{g} being exchanged between the VSC 10 and the electrical power network 40 via the PCC is equal to or below an active power saturation limit P_{sat_UPlim}, and controlling S2 the internal frequency ω_{EMF} to reduce the active power P_{g} below the active power saturation limit P_{sat_UPlim} when the active power P_{g} is above the active power saturation limit P_{sat_UPlim}, wherein the active power saturation limit P_{sat_UPlim} is based at least on one of at least one active power limit Pₗᵢₘ₁, Pₗᵢₘ₂, each active power limit based at least on at least one parameter V_{g}, P_{g}, Q_{g} of the electrical power network 40. It should be understood that the method may comprise at least one additional step based on the foregoing disclosure of the control device 20, the converter 10 and/or the electrical power network 40.

While the foregoing is directed to embodiments of the disclosure, other and further embodiments may be devised without parting from the inventive concept discussed herein. The scope of the invention is however determined by the claims.

## Claims

1. A control device (20) configured to control a voltage source converter, VSC, (10) electrically connected to an electrical power network (40) via a point of common connection, PCC, the control device (20) comprising an active power loop controller (21),
wherein, when the electrical power network (40) after a fault operates with a short-circuit power indicative of a short-circuit ratio, SCR, within at least one predetermined SCR interval (SCR_{I}, SCR_{II}), the active power loop controller (21) is configured to:
control an internal frequency (ω_{EMF}) of the VSC (10) via an active power control circuit (211) when an active power (P_{g}) being exchanged between the VSC and the electrical power network (40) via the PCC is equal to or below an active power saturation limit (P_{sat_UPlim}), and
control the internal frequency (ω_{EMF}) via the active power control circuit (211) and an active power limiter control circuit (212) to reduce the active power (P_{g}) below the active power saturation limit (P_{sat_UPlim}) when the active power (P_{g}) is above the active power saturation limit (P_{sat_UPlim}),
wherein the active power saturation limit (P_{sat_UPlim}) is based at least on one of at least one active power limit (Pₗᵢₘ₁, Pₗᵢₘ₂), each active power limit based at least on at least one parameter (V_{g}, P_{g}, Q_{g}) of the electrical power network (40).

2. The control device according to claim 1, wherein the at least one active power limit (Pₗᵢₘ₁, Pₗᵢₘ₂) comprises
a first active power limit (Pₗᵢₘ₁) based at least on a current limitation of a current (*i*_{f}) between the VSC (10) and the electrical power network (40) via the PCC, and/or
a second active power limit (*P*_{*lim*2}) based at least on an impedance estimation of a grid impedance of the electrical power network (40).

3. The control device according to claim 2, configured to:
in response to a SCR transient drop into the at least one predetermined SCR interval (SCR_{I}, SCR_{II}), the active power saturation limit (P_{sat_UPlim}) is initially based at least on the first active power limit (Pₗᵢₘ₁).

4. The control device according to any one of claim 2-3, wherein the at least one predetermined SCR interval (SCR_{I}, SCR_{II}) comprises
a first predetermined SCR interval (SCR_{I}) wherein the SCR is above a first predetermined SCR value SCR₁, and
a second predetermined SCR interval (SCR_{II}) wherein the SCR is below a second predetermined SCR value SCR₂,
wherein, if an effective range of the SCR is within the first predetermined SCR interval (SCR_{I}), the active power saturation limit (P_{sat_UPlim}) is based at least on the first active power limit (Pₗᵢₘ₁), and
wherein, if the effective range of the SCR is within the second predetermined SCR interval (SCR_{II}), the active power saturation limit (P_{sat_UPlim}) is based at least on the second active power limit (Pₗᵢₘ₂).

5. The control device according to any one of claims 2-4, wherein the first active power limit (*P*_{*lim*1}) is determined by ${P}_{lim 1} = \sqrt{{{S}_{avail}}^{2} - {{Q}_{g}}^{2}}$ wherein *S*ₐᵥₐᵢₗ = *S*_{rated}*V_{g}*/*V*_{rated}, wherein *V_{g}* represents the magnitude of the voltage at the PCC, *S*_{rated} represents the nominal value of the total power being exchanged at the PCC, *V*_{rated} represents the nominal value of the voltage at the PCC, and *Q_{g}* is the reactive power being exchanged between the VSC and the electrical power network via the PCC, wherein *Q_{g}* is determined based at least on a pre-filtered positive sequence of voltage (*V_{g}*) and current (*I_{g}*) measured at the PCC.

6. The control device according to any one of claims 2-5, wherein the second active power limit (*P*_{*lim*2}) is determined by ${P}_{lim 2} = \frac{{R}_{g , est} {{V}_{g}}^{2}}{{{R}_{g , est}}^{2} + {{X}_{g , est}}^{2}} + \frac{{{V}_{g}}^{2}}{\sqrt{{{R}_{g , est}}^{2} + {{X}_{g , est}}^{2}}}$ wherein *R_{g,est}* is the estimated fundamental frequency resistance of the electrical power network, *X_{g,est}* is the estimated fundamental frequency reactance of the electrical power network, and *V_{g}* is the voltage at the PCC.

7. The control device according to any one of claims 1-6, wherein at least one parameter of the at least one parameter (V_{g}, P_{g}, Q_{g}) of the electrical power network (40) is based at least on at least one locally measured parameter (V_{g}, I_{g}) of the electrical power network (40) measured at the PCC.

8. The control device according to any one of claims 1-7, wherein the SCR is approximated as $SCR \approx \frac{1}{{Z}_{g _ est}} \approx \frac{1}{\sqrt{{{R}_{g _ est}}^{2} + {{X}_{g _ est}}^{2}} / {Z}_{base}}$ wherein *Z_{g_est}* is the estimated per-unit value of the impedance of the electrical power network (40), *R_{g,est}* is the estimated fundamental frequency resistance of the electrical power network, *X_{g,est}* is the estimated fundamental frequency reactance of the electrical power network, and Z_{base} is the per unit value of the base impedance of the electrical power network (40).

9. The control device according to any one of claims 1-8, wherein the active power control circuit (211) is configured to:
determine a first frequency output (ω₁) based at least on the active power (P_{g}) and the active power reference (P_{ref});
wherein the frequency (ω_{EMF}) of the VSC is at least based on the first frequency output (ω₁).

10. The control device according to claim 9, wherein the active power limiter control circuit (212) is configured to:
determine a second frequency output (ω₂) based at least on the active power (P_{g}) and the active power saturation limit (P_{sat_UPlim}),
wherein the frequency (ω_{EMF}) of the VSC is at least based on a summation of the first frequency output (ω₁) and the second frequency change (*ω*₂).

11. The control device according to any of the preceding claims, wherein the control device is configured to provide a VSC voltage reference (*v*_{c,ref}) to the VSC (10) for controlling the VSC, wherein the internal frequency of the VSC is controlled by the VSC voltage reference (*v*_{c,ref}).

12. The control device according to claim 11, wherein
the active power controller (21) is configured to output an electromotive force phase (θ_{EMF}) for the VSC (10), and
the control device (20) is configured to determine the VSC voltage reference based at least on a VSC virtual electromotive force (v_{EMF}) for the VSC (10),
wherein the VSC virtual electromotive force is based at least on a electromotive force voltage (V_{EMF}) and the electromotive force phase (θ_{EMF}).

13. Power supporting system (1) comprising:
a voltage source converter, VSC, (10) configured to be electrically connectable to an electrical power network via a point-of-common-coupling, PCC, and
a control device (20) according to any of the preceding claims for controlling the VSC (10).

14. The power supporting system according to claim 13, wherein the power supporting system is a first power supporting system configured to exchange information with at least a second power supporting system electrically connected to the electrical power network for power coordination.

15. Method of controlling a voltage source converter, VSC, (10) electrically connected to an electrical power network (40) via a point of common connection, PCC, the method implemented by a control device (20), the method comprising:
when the electrical power network (40) after a fault operates with a short-circuit power indicative of a short-circuit ratio, SCR, within at least one predetermined SCR interval (SCR_{I}, SCR_{II}),
controlling an internal frequency (ω_{EMF}) of the VSC (10) when an active power (P_{g}) being exchanged between the VSC (10) and the electrical power network (40) via the PCC is equal to or below an active power saturation limit (P_{sat_UPlim}), and
controlling the internal frequency (ω_{EMF}) to reduce the active power (P_{g}) below the active power saturation limit (P_{sat_UPlim}) when the active power (P_{g}) is above the active power saturation limit (P_{sat_UPlim}),
wherein the active power saturation limit (P_{sat_UPlim}) is based at least on one of at least one active power limit (Pₗᵢₘ₁, Pₗᵢₘ₂), each active power limit based at least on at least one parameter (V_{g}, P_{g}, Q_{g}) of the electrical power network (40).
